# EUROPEAN PATENT APPLICATION

(11) **EP 3 696 220 A1**
(43) Date of publication of application: **19.08.2020**
(21) Application number: 19157719.6
(22) Date of filing: 18.02.2019
(51) Int. Cl.: C08K 3/04, C08G 65/40, C08G 69/26, C08K 7/02, C08K 7/06, C08K 7/14, C08K 9/08, C08L 71/00, C08L 75/04, C08L 77/00, C08L 77/06, C08L 81/00, C08L 81/02

(54) **POLYMER COMPOSITIONS INCLUDING POLYURETHANE SIZED CARBON FIBERS**

(71) Applicant: Solvay Specialty Polymers USA, LLC., Alpharetta, GA 30005-3914 (US)
(72) Inventor: SMITH, DeeDee, Dacula, GA 30019 (US)
(74) Representative: Benvenuti, Federica

(57) **Abstract**

Described here are polymer compositions including a thermoplastic polymer and a carbon fiber having a polyurethane sizing. The thermoplastic polymer is selected from the group consisting of semi-aromatic polyamide polymers, poly(aryl ether ketone) ("PAEK") polymers and polyphenylene sulfide ("PPS") polymers. It was surprisingly discovered that for many thermoplastic polymer compositions, mechanical performance was significantly improved with polyurethane sized carbon fiber, relative to analogous thermoplastic compositions in which the carbon fiber is sized specifically for the particular thermoplastic resin. Furthermore, in some embodiments, it was also surprisingly discovered that carbon fibers incorporating at least 2.5 wt.% of the polyurethane sizing provided further increases in mechanical performance of the resulting polymer composition.

## Description

### FIELD OF THE INVENTION

The invention relates to polymer compositions including a thermoplastic polymer and carbon fibers having a polyurethane sizing, which have improved mechanical performance. The invention also relates to methods for forming the polymer compositions and articles made from the polymer compositions.

### BACKGROUND OF THE INVENTION

Polymer compositions often include reinforcing fibers, such as carbon fibers, in order to improve their mechanical properties. Carbon fiber for thermoplastic polymer compositions includes a sizing. In one aspect, the sizing serves to protect the carbon fiber filaments during handling and processing (*e.g*. compounding). In another aspect, the sizing improves the compatibility between the carbon fiber and the thermoplastic polymer of the polymer composition. Of course, because the chemical structure of different thermoplastic polymers is different, the sizing composition is adapted for each different thermoplastic polymer.

### SUMMARY OF INVENTION

In a first aspect, the invention relates to a polymer composition including a thermoplastic polymer selected from the group consisting of a semi-aromatic polyamide polymer, a poly(aryl ether ketone) ("PAEK") polymer and a polyphenylene sulfide ("PPS") polymer and a carbon fiber having a polyurethane sizing. In some embodiments, the carbon fiber has at least 2.5 wt.% of the polyurethane sizing, relative to the total weight of the carbon fiber. In some embodiments, the carbon fiber comprises at least 2.9 wt.% of the polyurethane sizing, relative to the total weight of the carbon fiber. In some embodiments the carbon fiber has no more than 5 wt.% of the polyurethane sizing, preferably no more than 4 wt.% of the polyurethane sizing, relative to the total weight of the carbon fiber.

In some embodiments, the thermoplastic polymer is a semi-aromatic polyamide polymer having a recurring unit R_{PA} represented by a formula selected from the following group of formulae: 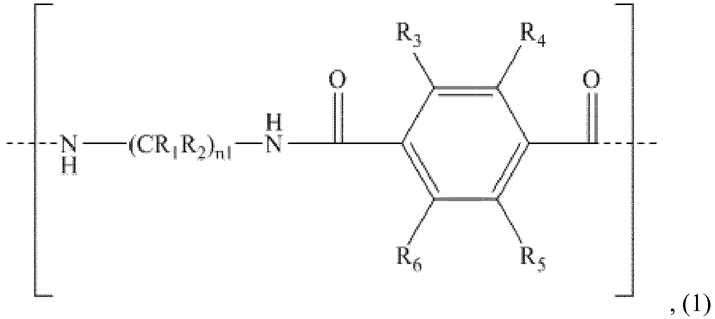 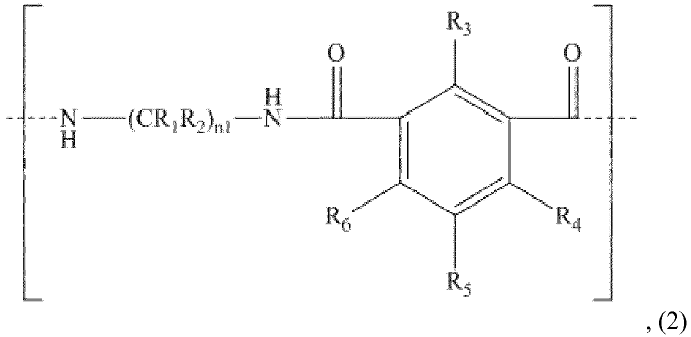 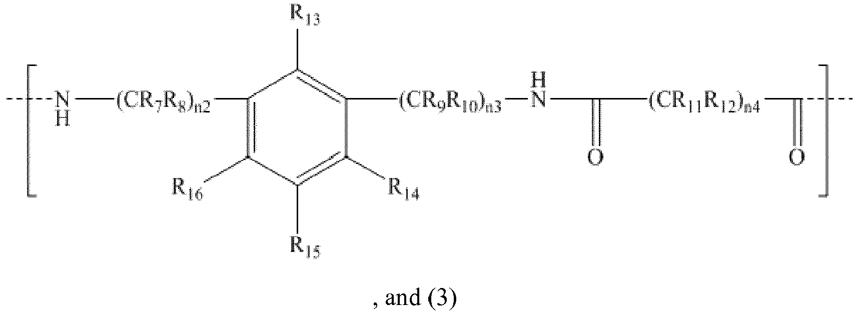 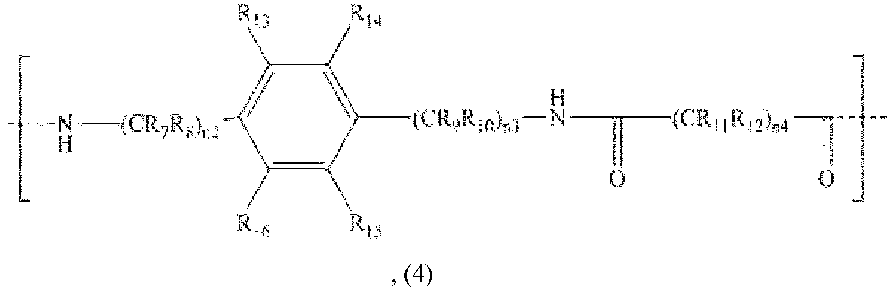 where R₁, R₂, and R₇ to R₁₂, at each location, and R₃ to R₆ and R₁₃ to R₁₆ are independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; n₁ and n₂ are independently selected integers from 4 to 10; and n₂ and n₃ are independently selected integers from 1 to 5. In some embodiments, the semi-aromatic polyamide polymer is selected from the group consisting of PA 4T, PA 6T, PA 61, PA 9T, PA 10T and MXD6.

In some embodiments, the semi-aromatic polyamide polymer further comprises a recurring unit R**_{PA} represented by the following formula: 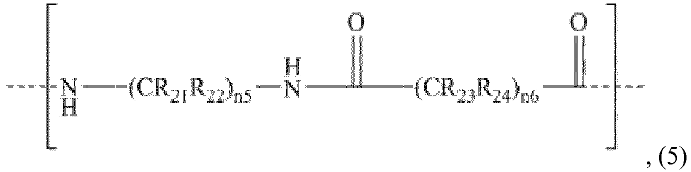 where R₂₁ to R₂₄, at each location, is independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; n₅ is an integer from 4 to 10; and n₆ is an integer from 2 to 8. In some embodiments, the semi-aromatic polyamide polymer is selected from the group consisting of PA 6T/6I, PA 6T/66 and PA 6T/6I/66.

In some embodiments, the thermoplastic polymer is a PAEK polymer having a recurring unit R_{PAEK} represented by a formula selected from the following group of formulae: 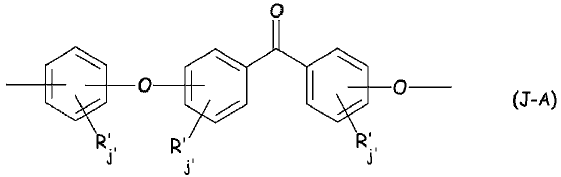 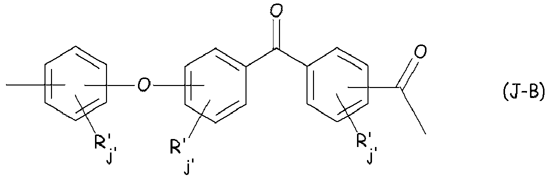 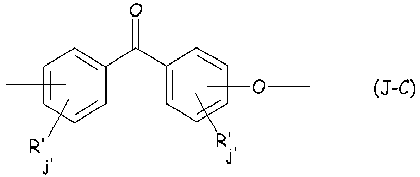 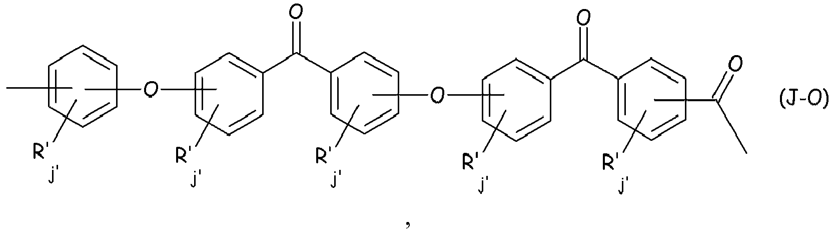 where R', at each location, is indepenendly selected from the group consisting of a halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; j' is an integer from 0 to 4; and Y' is an alkylidene group.

In some embodiments, the thermoplastic polymer is a PPS polymer having a recurring unit R_{PPS} represented by the following formula: 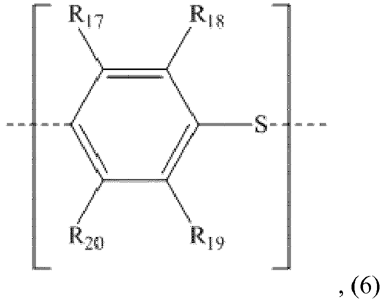 where R₁₇ to R₂₀ are independently selected from the group consisting of a hydrogen, an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine.

In some embodiments, the polymer composition includes 20 wt.% to 80 wt.% of the thermoplastic polymer and from 5 wt.% to 60 wt.% of the carbon fiber, wherein the weight percent of the thermoplastic polymer and carbon fiber is relative to the total weight of the polymer compositions. In some embodiments, the polymer composition further includes glass fiber. In some such embodiments, the polymer composition includes at from 5 wt.% to 50 wt.% of the glass fiber.

In another aspect, the invention relates to an article including the polymer composition, where the article is selected from the group consisting of automotive components and mobile electronic device components.

### DETAILED DESCRIPTION OF THE INVENTION

Described here are polymer compositions including a thermoplastic polymer and a carbon fiber having a polyurethane sizing. The thermoplastic polymer is selected from the group consisting of semi-aromatic polyamide polymers, poly(aryl ether ketone) ("PAEK") polymers and polyphenylene sulfide ("PPS") polymers. It was surprisingly discovered that for many thermoplastic polymer compositions, mechanical performance was significantly improved with polyurethane sized carbon fiber, relative to analogous thermoplastic compositions in which the carbon fiber is sized specifically for the particular thermoplastic resin. Furthermore, in some embodiments, it was also surprisingly discovered that carbon fibers incorporating at least 2.5 wt.% of the polyurethane sizing provided further increases in mechanical performance of the resulting polymer composition.

Traditionally, carbon fibers include a sizing that is matched to the intended polymer system. Sizing refers to the coating formed over the carbon fiber to enhance its compatibility with the thermoplastic polymer in the polymer composition, as well as to protect the fiber during processing in which it is incorporated into the polymer composition. Due to the different chemical structure of different thermoplastic polymers, carbon fibers are sized with particular compounds to increase the interaction between the carbon fiber and the particular thermoplastic polymer. For example, for polyamide polymers, carbon fibers are traditionally sized with an amide sizing. Similarly, for poly(ether ether ketone) ("PEEK) resins and polyphenylene sulfide ("PPS") resins, carbon fibers are traditionally can be sized with polyamide-imide and epoxy, respectively, to increase the compatibility between the carbon fiber and the thermoplastic polymer.

It was surprisingly discovered that polymer compositions including a carbon fiber with polyurethane sizing provided for polymer compositions have increased mechanical performance, relative to polymer compositions including a carbon fiber having a different sizing that is particularly matched to the chemistry of the thermoplastic polymer.

### The Thermoplastic Polymer

The polymer composition includes a thermoplastic polymer selected from the group consisting of semi-aromatic polyamide polymers, PAEK polymers and PPS polymers. In some embodiments, the concentration of the thermoplastic polymer in the polymer composition is at least 20 weight percent ("wt.%") or at least 30 wt.%. Additionally or alternatively, in some embodiments, the concentration of the thermoplastic polymer in the polymer composition is no more than 80 wt.% or no more than 70 wt.%. In some embodiments, the concentration of the thermoplastic polymer in the polymer composition is from 20 wt.% to 80 wt.% or from 30 wt.% to 70 wt%. As used herein, wt.% is relative to the total weight of the polymer composition, unless explicitly noted otherwise.

### The Semi-Aromatic Polyamide Polymer

In some embodiments, the polymer composition includes a semi-aromatic polyamide polymer. A semi-aromatic polyamide polymer refers to any polyamide polymer having at least 50 mole percent ("mol%") of a recurring unit R_{PA} having at least one amide group (---CONH---) and at least one arylene group, and at least one alkylene group. Arylene groups of interest include, but are not limited to, phenylene, naphthalene, p-biphenylene and metaxylylene. In some embodiments, the semi-aromatic polyamide includes at least 60 mol%, at least 70 mol%, at least 80 mol%, at least 90 mol%, at least 95 mol%, at least 99 mol%, or at least 99.9 mol% of recurring unit R_{PA}. As used herein, mol% is relative to the total number of moles of recurring units in the polymer, unless explicitly noted otherwise. Preferably, the semi-aromatic polyamide polymer is a semi-crystalline polyamide polymer. As used herein, a semi-aromatic polyamide has a heat of fusions of at least 5 joules per gram ("J/g"), as measured according to ASTM D 3418.

In some embodiments, recurring unit R_{PA} is represented by a formula selected from the following group of formulae: 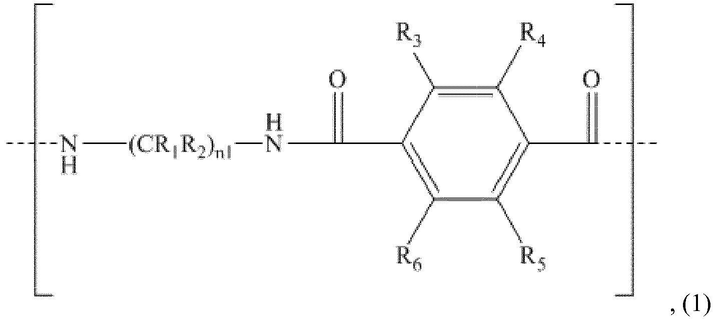 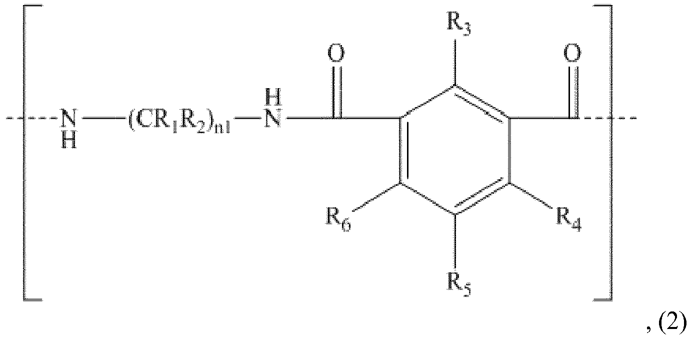 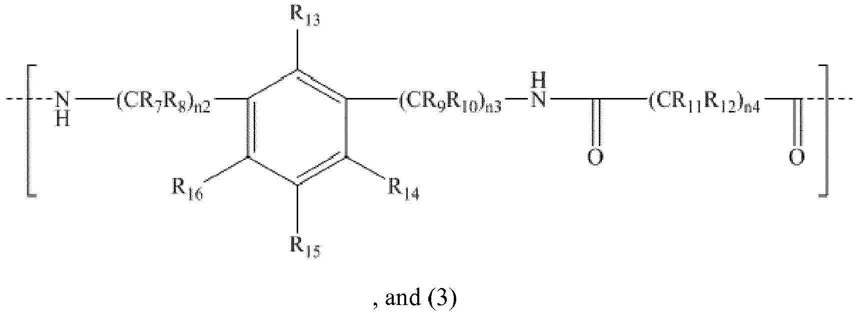 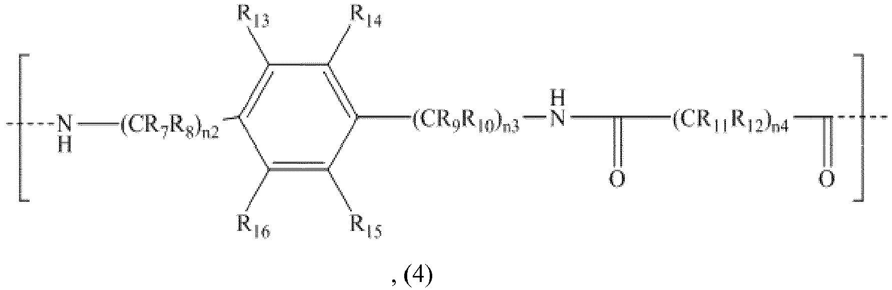 where R₁, R₂, and R₇ to R₁₂, at each location, and R₃ to R₆ and R₁₃ to R₁₆ are independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; n₁ and n₂ are independently selected integers from 4 to 10; and n₂ and n₃ are independently selected integers from 1 to 5. As used herein, a dashed bond ("---") indicates a bond to an atom outside the drawn structure, for example, to an atom in an adjacent recurring unit. Furthermore, the person of ordinary skill in the art will recognize that in the representation -(CRₐR_{b})ₙ-, there are n carbon atoms bonded in a linear chain, with each carbon having an independently selected Rₐ and R_{b} group bound to it. In some embodiments, R₁, R₂, and R₇ to R₁₂, at each location, and R₃ to R₆ and R₁₃ to R₁₆ are all hydrogen. Additionally or alternatively, in some embodiments, n₁ and n₄ are 6, n₂ and n₃ are 1, or both. Examples of desirably semi-aromatic polyamides according to Formulae (1) to (4) include, but are not limited to PA 4T, PA 6T, PA 61, PA 9T, PA 10T and MXD6.

In some embodiments, the semi-aromatic polyamide polymer has an inherent viscosity of 0.7 to 1.4 deciliters/g ("dL/g"), as measured according to ASTM D5336.

Of course, the semi-aromatic polyamide polymer can have additionally recurring units distinct from R_{PA}. For example, in some embodiments, the semi-aromatic polyamide polymer can have one or more additional recurring units, R*_{PA}, each distinct from R_{PA} and represented by a formula selected from formulae (1) to (4). Additionally or alternatively, in some embodiments, the semi-aromatic polyamide polymer can include one or more aliphatic recurring units, R**_{PA}, according to the following formula: 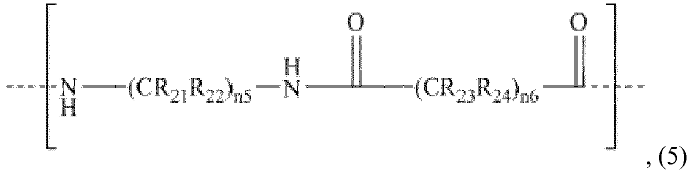 where R2₁ to R₂₄, at each location, is independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; n₅ is an integer from 4 to 10 and n₆ is an integer from 2 to 8. In some embodiments, R₂₁ to R₂₄, at each location is a hydrogen. Additionally or alternatively, in some embodiments, n₅ is 6 and n₆ is 4. Examples of desirably semi-aromatic polyamides including additionally recurring units include, but are not limited to, PA 6T/6I, PA 6T/66 and PA 6T/6I/66. In some embodiments, when the polyamide polymer includes further recurring units, the total number of recurring units R_{PA}, R*_{PA} and R**_{PA} is within the ranges described above with respect to RPA. In some other embodiments, the total number of recurring unit R_{PA}, is within the ranges described above.

### The PAEK Polymer

In some embodiments, the polymer composition includes a PAEK polymer including at least 50 mol% of a recurring unit R_{PAEK}. In some embodiments, the PAEK polymer includes at least 60 mol%, at least 70 mol%, at least 80 mol%, at least 90 mol%, at least 95 mol%, at least 99 mol% or at least 99.9 mol% of the recurring unit R_{PAEK}.

Recurring unit R_{PAEK} is represented by a formula selected from the following group of formulae: 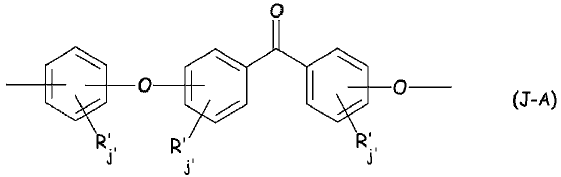 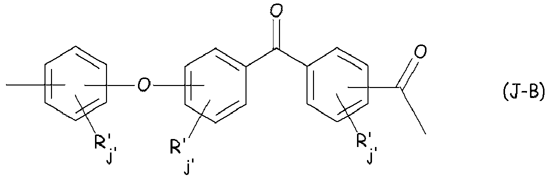 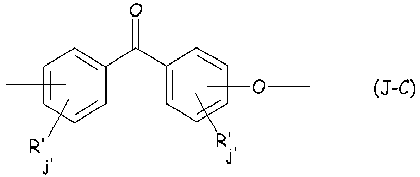 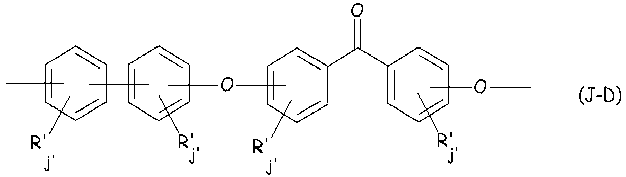 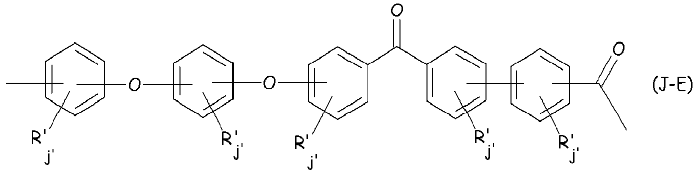 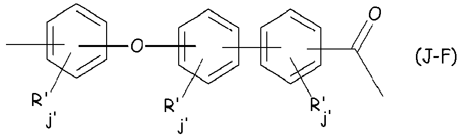 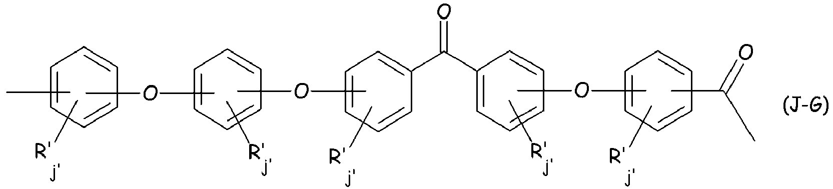 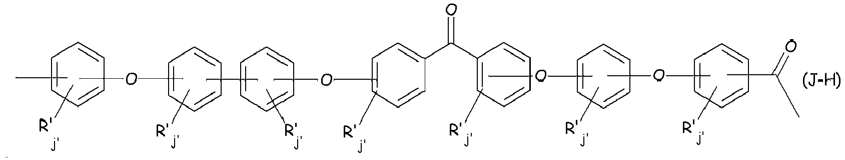 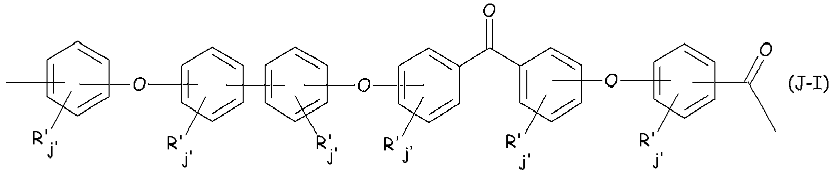 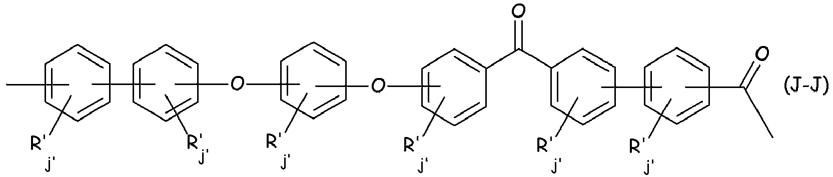 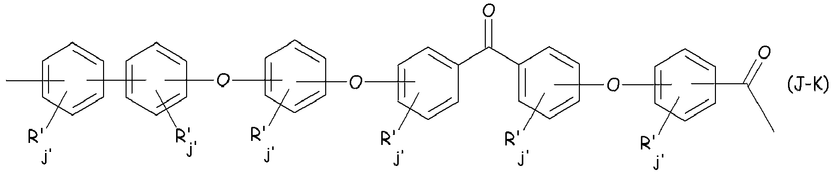 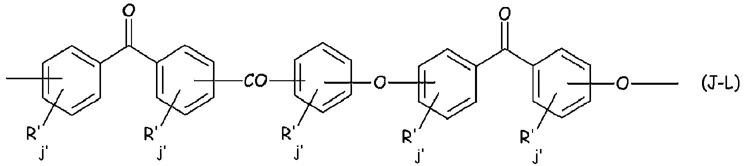 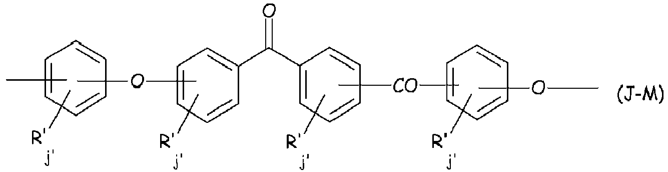 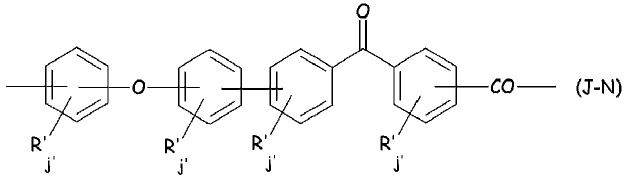 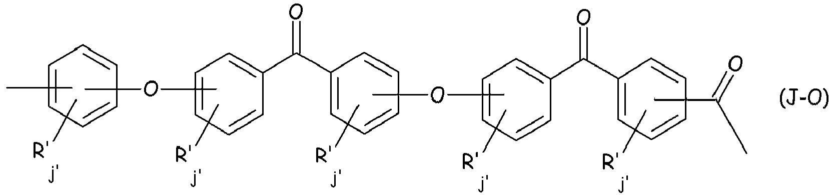 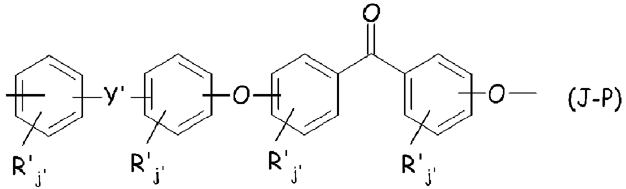 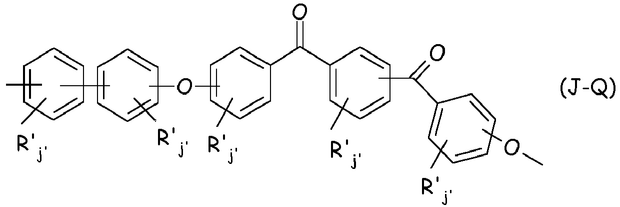 where R', at each location, is independently selected from the group consisting of a halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; j' is an integer from 0 to 4; and Y' is an alkylidene group. For clarity, the number of hydrogens on each R'_{j'} substituted ring is 4-j.

In recurring unit R_{PAEK}, the respective phenylene moieties may independently have 1,2-, 1,4- or 1,3 -linkages to the other moieties different from R' in the recurring unit. Preferably, said phenylene moieties have 1,3- or 1,4-linkages, more preferably they have 1,4-linkages. Still, in recurring unit R_{PAEK}, j' is preferably at each occurrence zero, that is to say that the phenylene moieties have no other substituents than those enabling linkages in the main chain of the polymer. Preferred recurring unit R_{PAEK} are thus selected from those of formulae (J'-A) - (J'-Q) here below:

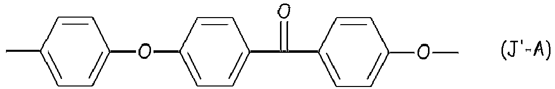

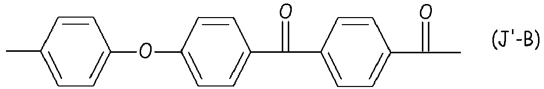

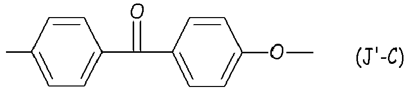

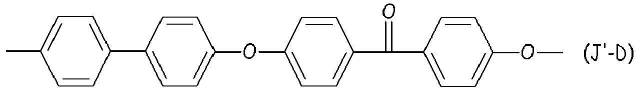

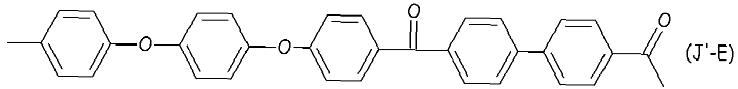

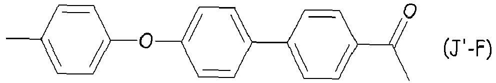

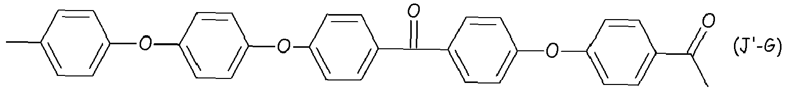

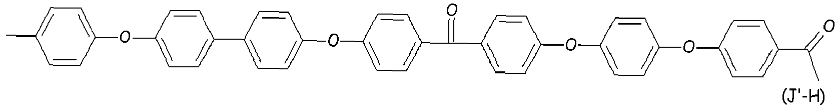

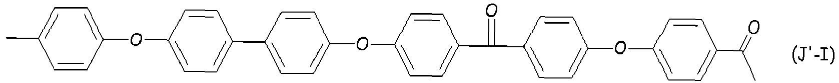

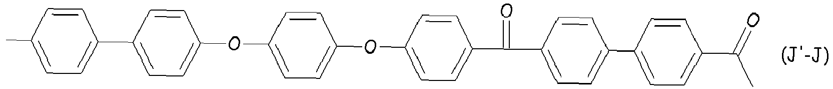

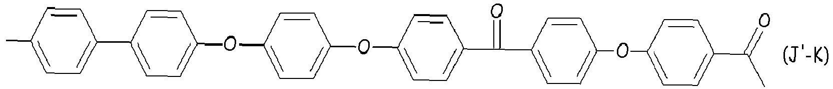

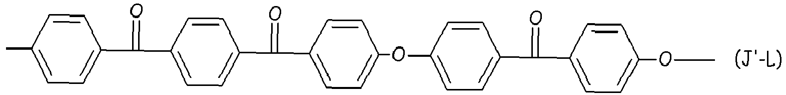

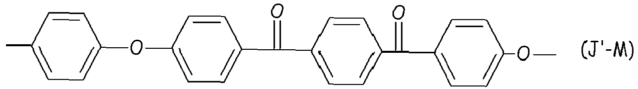

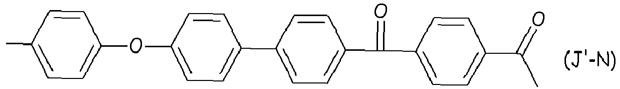

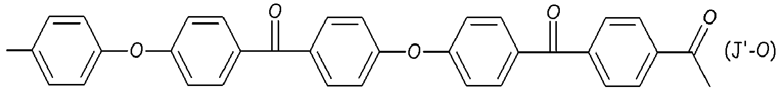

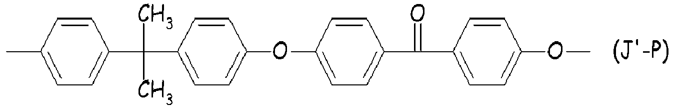

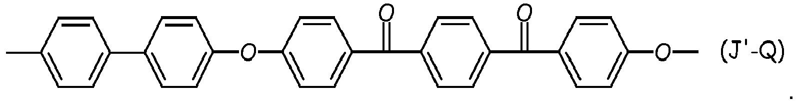

In some embodiments, recurring unit R_{PAEK} is represented by a formula selected from the group of formulae consisting of (J-A), (J-B), (J-C) and (J-O). In some such embodiments, recurring unit R_{PAEK} is represented by a formula selected from the group of formulae consisting of (J'-A), (J'-B), (J'-C) and (J'-O).

In a preferred embodiment, the PAEK polymer is a poly(ether ether ketone) ("PEEK") polymer (recurring unit R_{PAEK} is represented by Formula (J-A), preferably Formula (J'-A)). Examples of commercially available suitable PAEK polymers include, but are not limited to, KetaSpire® PEEK from Solvay Specialty Polymers, Vestakeep® PEEK from Evonik, Victrex® PEEK, PEEK-HT and PEEK-ST from Victrex®, Cypek® FC and Cypek® HT PEKK from Cytec.

In some embodiments, the PAEK polymer has a melt viscosity of at least 0.05 kN-s/m², more preferably of at least 0.07 kN-s/m², more preferably of at least 0.08 kN-s/m². Additionally or alternatively, in some embodiments, the PAEK polymer has a melt viscosity of at most 0.65 kN-s/m², more preferably of at most 0.60 kN-s/m², more preferably of at most 0.50 kN-s/m². In some embodiments, the PAEK polymer has a melt viscosity of from 0.05 kN-s/m² to 0.65 kN-s/m², from 0.07 kN-s/m² to 0.60 kN-s/m², or from 0.08 kN-s/m² to 0.50 kN-s/m². Melt viscosity can be measured according to ASTM D3835 at 400 °C and 1000 s⁻¹ using a tungsten carbide die of 0.5 x 3.175 mm.

In some embodiments, the PAEK polymer has an inherent viscosity of at least 0.4 dL/g, more preferably of at least 0.5 dL/g, most preferably of at least 0.6 dL/g. Additionally or alternatively, in some embodiments, the PAEK polymer has an inherent viscosity of at most 2.0 dL/g, more preferably of at most 1.7 dLg/, most preferably of at most 1.5 dL/g. In some embodiments, the PAEK polymer has an inherent viscosity of from 0.4 dL/g to 2.0 dL/g, from 0.5 dL/g to 1.7 dL/g, or from 0.6 dL/g to 1.5 dL/g. Inherent viscosity can be measured according to ASTM D2857-95, at 0.1 vol% in concentrated sulfuric acid at 25 °C.

### The PPS Polymer

In some embodiments, the polymer composition includes a PPS polymer. The PPS polymer has, relative to the total number of recurring units in the PPS polymer, at least 50 mol% of a recurring unit R_{PPS}. In some embodiments, the PPS polymer includes at least 60 mol%, at least 70 mol%, at least 80 mol%, at least 90 mol%, at least 95 mol%, at least 99 mol%, or at least 99.9 mol% of recurring unit R_{PPS}.

Recurring unit R_{PPS} is represented by the following formula: 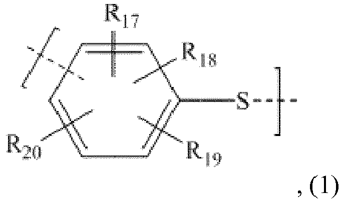 where R₁₇ to R₂₀ are independently selected from the group consisting of a hydrogen, an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine. Preferably R₁₇ to R₂₀ are all hydrogen. In some embodiments, recurring unit R_{PPS} is represented by the following formula: 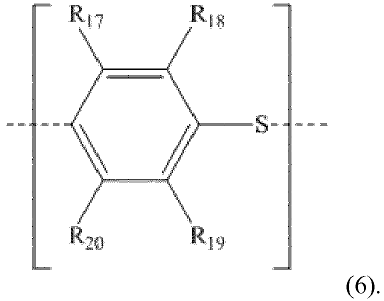 In some such embodiments, R¹⁷ to R¹⁸ are all hydrogen.

In some embodiments, the PPS polymer has a melt flow rate of 10 g/10 min. to 1000 g/10 min., from 20 g/10 min. to 500 g/10 min., or from 30 g/10 min. to 200 g/10 min. Melt flow rate can be measured according to ASTM D1238, Procedure B, at 316° C and 5 kg.

### The Carbon Fiber

The polymer composition includes a carbon fiber having a polyurethane sizing. As noted above, it was surprisingly discovered that for many thermoplastic polymer compositions, mechanical performance was significantly improved with polyurethane sized carbon fiber, relative to analogous thermoplastic compositions in which the carbon fiber is sized specifically for the particular thermoplastic resin. Examples of common sizing includes, but is not limited to, epoxy, polyester, nylon, urethane, or polycarbonate, which are typically applied to the carbon fiber from solution or emulsion.

Carbon fibers of interest herein have a polyurethane sizing. Furthermore, in some embodiments, the carbon fiber has at least 2.5 wt.% or at least 2.9 wt.% of the polyurethane sizing, relative to the total weight of the carbon fiber. Additionally or alternatively, in some embodiments the carbon fiber has no more than 6 wt% or no more than 5 wt.% of the polyurethane sizing, relative to the total weight of the carbon fiber. In some embodiments, the carbon fiber has from 2.5 wt.% to 6 wt.%, from 2.9 wt.% to 6 wt.% or from 2.9 wt.% to 5 wt.% of the polyurethane sizing, relative to the total weight of the carbon fiber. The amount of sizing can be determined by thermogravimetric analysis ("TGA") using a 10°C/minute ramp from room temperature to 400 °C in air.

While the morphology of the carbon fiber is not particularly limited, in some embodiments, the carbon fibers have an average length of 4 mm to 10 mm. Additionally or alternatively, in some embodiments, the carbon fibers have an average aspect ratio (longest length/longest diameter) of 20 to 40, where the diameter is perpendicular to the length. In some embodiments, the carbon fiber can have a tow of 12,000 to 50,000.

In some embodiments, the polymer composition includes at least 5 wt.%, at least 10 wt.%, at least 15 wt.% or at least 20 wt.% of the carbon fiber. Additionally or alternatively, in some embodiments, the polymer composition includes no more than 60 wt.%, no more than 50 wt.%, no more than 45 wt.%, or no more than 40 wt% of the carbon fiber. In some embodiments, the polymer compositions includes from 5 wt.% to 60 wt.%, from 10 wt.% to 50 wt.%, from 15 wt.% to 45 wt.% or from 20 wt.% to 40 wt.% of the carbon fiber.

### Glass Fibers

In some embodiments, the polymer composition includes glass fiber. Glass fibers are silica-based glass compounds that contain several metal oxides which can be tailored to create different types of glass. The main oxide is silica in the form of silica sand; the other oxides such as calcium, sodium and aluminum are incorporated to reduce the melting temperature and impede crystallization. The glass fibers can be added as endless fibers or as chopped glass fibers. The glass fibers have generally an equivalent diameter of 5 to 20 preferably of 5 to 15 µm and more preferably of 5 to 10 µm. All glass fiber types, such as A, C, D, E, M, S, R, T glass fibers (as described in chapter 5.2.3, pages 43-48 of Additives for Plastics Handbook, 2nd ed, John Murphy), or any mixtures thereof or mixtures thereof may be used.

E, R, S and T glass fibers are well known in the art. They are notably described in Fiberglass and Glass Technology, Wallenberger, Frederick T.; Bingham, Paul A. (Eds.), 2010, XIV, chapter 5, pages 197-225. R, S and T glass fibers are composed essentially of oxides of silicon, aluminium and magnesium. In particular, those glass fibers comprise typically from 62-75 wt. % of SiO2, from 16-28 wt. % of Al2O3 and from 5-14 wt. % of MgO. On the other hand, R, S and T glass fibers comprise less than 10 wt. % of CaO.

In some embodiments, the glass fiber is a high modulus glass fiber. High modulus glass fibers have an elastic modulus of at least 76, preferably at least 78, more preferably at least 80, and most preferably at least 82 GPa as measured according to ASTM D2343. Examples of high modulus glass fibers include, but are not limited to, S, R, and T glass fibers. A commercially available source of high modulus glass fibers is S-1 and S-2 glass fibers from Taishan and AGY, respectively.

The morphology of the glass fiber is not particularly limited. As noted above, the glass fiber can it can have a circular cross-section ("round glass fiber") or a non-circular cross-section ("flat glass fiber"). Examples of suitable flat glass fibers include, but are not limited to, glass fibers having oval, elliptical and rectangular cross sections. In some embodiments in which the polymer composition includes a flat glass fiber, the flat glass fiber has a cross-sectional longest diameter of at least 15 µm, preferably at least 20 µm, more preferably at least 22 µm, still more preferably at least 25 µm. Additionally or alternatively, in some embodiments, the flat glass fiber has a cross-sectional longest diameter of at most 40 µm, preferably at most 35 µm, more preferably at most 32 µm, still more preferably at most 30 µm. In some embodiments, the flat glass fiber has a cross-sectional diameter was in the range of 15 to 35 µm, preferably of 20 to 30 µm and more preferably of 25 to 29 µm. In some embodiments, the flat glass fiber has a cross-sectional shortest diameter of at least 4 µm, preferably at least 5 µm, more preferably at least 6 µm, still more preferably at least 7 µm. Additionally or alternatively, in some embodiments, the flat glass fiber has a cross-sectional shortest diameter of at most 25 µm, preferably at most 20 µm, more preferably at most 17 µm, still more preferably at most 15 µm. In some embodiments, the flat glass fiber has a cross-sectional shortest diameter was in the range of 5 to 20 preferably of 5 to 15 µm and more preferably of 7 to 11 µm.

In some embodiments, the flat glass fiber has an aspect ratio of at least 2, preferably at least 2.2, more preferably at least 2.4, still more preferably at least 3. The aspect ratio is defined as a ratio of the longest diameter in the cross-section of the glass fiber to the shortest diameter in the same cross-section. Additionally or alternatively, in some embodiments, the flat glass fiber has an aspect ratio of at most 8, preferably at most 6, more preferably of at most 4. In some embodiments, the flat glass fiber has an aspect ratio of from 2 to 6, and preferably, from 2.2 to 4. In some embodiments, in which the glass fiber is a round glass fiber, the glass fiber has an aspect ratio of less than 2, preferably less than 1.5, more preferably less than 1.2, even more preferably less than 1.1, most preferably, less than 1.05. Of course, the person of ordinary skill in the art will understand that regardless of the morphology of the glass fiber (e.g. round or flat), the aspect ratio cannot, by definition, be less than 1.

In some embodiments, the concentration of the glass fiber is at least 5 wt.%, at least 20 wt.%, at least 25 wt.% or at least 30 wt.%. Additional or alternatively, in some embodiments, the concentration of the glass fiber is no more than 50 wt.%. In some embodiments, the concentration of the glass fiber is from 5 wt.% to 50 wt.%, from 20 wt.% to 50 wt.%, from 25 wt.% to 50 wt.% or from 30 wt.% to 50 wt.%.

### Additives

In some embodiments, polymer composition includes an additive selected from the group consisting of ultra-violet ("UV") stabilizers, heat stabilizers, pigments, dyes, flame retardants, impact modifiers, and any combination of one or more thereof. When present the total concentration of additives is at least 0.5 wt.% or at least 1 wt.%. Additionally or alternatively, in some embodiments, the total concentration of the additives is no more than 20 wt.%, no more than 15 wt.%, no more than 10 wt.%, no more than 5 wt.%, no more 4 wt.% or no more than 3 wt.%. In some embodiments, the total concentration of the additives is from 0.5 wt.% to 20 wt.%, from 0.5 wt.% to 15 wt.%, from 0.5 wt.% to 10wt.%, from 0.5 wt.% to 5 wt.%, from 1 wt.% to 5 wt.%, from 1 wt.% to 4 wt.% or from 1 wt.% to 3 wt.%.

### Formation Methods

The polymer compositions can be made using methods well known in the art. For example, in one embodiment, the polymer composition can be made by melt-blending the polymers in the blend, the carbon fibers, and any other reinforcing fibers (*e*.*g*. glass fibers) and additives. Any suitable melt-blending method may be used for combining the components of the polymer composition. For example, in one embodiment, all of the polymer composition components (*e.g.* the thermoplastic polymer, carbon fiber polyamide, the optional glass fiber and any optional additives) are fed into a melt mixer, such as single screw extruder or twin screw extruder, agitator, single screw or twin screw kneader, or Banbury mixer. The components can be added to the melt mixer all at once or gradually in batches. When the components are gradually added in batches, a part of the components is first added, and then is melt-mixed with the remaining components are subsequently added, until an adequately mixed composition is obtained. Where the polymer composition includes a carbon fiber or glass fiber having a long physical shape (for example, a long carbon fiber or long glass fiber), drawing extrusion molding may be used to prepare the polymer composition.

### Articles

The polymer compositions can be desirably incorporated into many articles, including but not limited to, automotive components and mobile electronic device components. With respect to automotive components, at least in part due to the increased mechanical performance, the polymer compositions described herein can be desirably incorporated into under the hood automotive applications. In some such embodiments, the thermoplastic polymer of the polymer composition is a PPS or a semi-aromatic polyamide polymer (*e.g*. polyphthalamide) polymer, due to their relatively high heat resistance and chemical resistance. Desirably automotive components include, but are not limited to, engine cradles, front end covers, fuel line connections, valve covers, intake covers, water pumps, fuel pumps, oil pans, charge air cooler ducts, thermostat housing, cam cover, fuel lines, coolant lines, thermostat housing, radiators, and engine mounts.

The term "mobile electronic device" is intended to denote an electronic device that is designed to be conveniently transported and used in various locations. Representative examples of mobile electronic devices may be selected from the group consisting of mobile electronic phones, personal digital assistants, laptop computers, tablet computers, radios, cameras and camera accessories, watches, calculators, music players, global positioning system receivers, portable games, hard drives and other electronic storage devices. Preferred mobile electronic devices include laptop computers, tablet computers, mobile electronic phones and watches.

Components of mobile electronic devices of interest herein include, but are not limited to, fitting parts, snap fit parts, mutually moveable parts, functional elements, operating elements, tracking elements, adjustment elements, carrier elements, frame elements, switches, connectors, cables, housings, and any other structural part other than housings as used in a mobile electronic devices, such as for example speaker parts. Said mobile electronic device components can be notably produced by injection molding, extrusion or other shaping technologies.

A "mobile electronic device housing" refers to one or more of the back cover, front cover, antenna housing, frame and/or backbone of a mobile electronic device. The housing may be a single article or comprise two or more components. A "backbone" refers to a structural component onto which other components of the device, such as electronics, microprocessors, screens, keyboards and keypads, antennas, battery sockets, and the like are mounted. The backbone may be an interior component that is not visible or only partially visible from the exterior of the mobile electronic device. The housing may provide protection for internal components of the device from impact and contamination and/or damage from environmental agents (such as liquids, dust, and the like). Housing components such as covers may also provide substantial or primary structural support for and protection against impact of certain components having exposure to the exterior of the device such as screens and/or antennas.

In a preferred embodiment, the mobile electronic device housing is selected from the group consisting of a mobile phone housing, an antenna housing, a tablet housing, a laptop computer housing, a tablet computer housing or a watch housing.

The article such as the mobile electronic device components can be made from the polymer composition using any suitable melt-processing method. For example, formation of the mobile electronic device component includes injection molding or extrusion molding the polymer composition. Injection molding is a preferred method.

### EXAMPLES

The following examples demonstrate the mechanical performance of the polymer compositions including a carbon fiber sized with polyurethane.

For each sample, one or more of the following components were used. Each carbon fiber comprised chopped carbon fiber having an average length of 6 mm. Furthermore, some samples included an additive package that contained processing aids (*e.g*. lubricants), pigments, thermal stabilizers and the like.

### Thermoplastic Polymers

All polymers were obtained from Solvay Specialty Polymers USA, L.L.C.
- Semi-aromatic Polyamide 1: PA6T/6I/66
- Semi-aromatic Polyamide 2: MXD6
- PAEK Polymer: PEEK
- PPS Polymer: PPS).

### Reinforcing Fibers

- Carbon Fiber 1: Carbon Fiber - Polyurethane Sizing (Apply Carbon CF.OS.U1)
- Carbon Fiber 2: Carbon Fiber - Amide Sizing (Apply Carbon CF.OS.A)
- Carbon Fiber 3: Carbon Fiber - Polyurethane Sizing (Sigrafil C30 S006 PUT T 130)
- Carbon Fiber 4: Carbon Fiber - Aromatic Polymer Sizing (Sigrafil C30 S006 APS T190)
- Carbon Fiber 5: Carbon Fiber with 2.7 wt.% Polyurethane Sizing
- Carbon Fiber 6: Carbon Fiber with 3 wt.% Polyurethane Sizing
- Carbon Fiber 7: Carbon Fiber with 3.5 wt.% Polyurethane Sizing
- Glass Fiber: E-Glass Fiber - (PPG ChopVantage® HP 3540)

Mechanical tensile properties, e.g. stress at break (tensile strength) and strain at break (elongation at break) were measured according to ISO 527-2/1A. Measurements were made on injection molded ISO tensile bars. Mold temperature for the test specimen ranged from 100-120° C. and melt temperature ranged from 240-330° C, depending on the polymer system. The thickness of the test bars was 4 mm and their width was of 10 mm. According to ISO 527-2/1A, the tensile strength and elongation were determined at a testing speed of 5 mm/min.

### Example 1 : Mechanical Performance of Polymer Compositions including a Semi-Aromatic Polyamide Polymer and a Polyurethane Sized Carbon Fiber

This example demonstrate the mechanical performance of polyurethane sized carbon fibers in polymer compositions including a semi-aromatic polyamide polymer as the thermoplastic polymer.

To demonstrate mechanical performance, 4 samples were formed, 2 with either PA 6T as the semi-aromatic polyamide polymer and 2 with MXD6 as the semi-aromatic polyamide polymer. For each sample, mechanical properties were tested and described above. Sample parameters and mechanical testing results are displayed in Tables 1 (PA6) and 2 (MXD6). For clarity, the additives package in each sample was identical.

**TABLE 1**

| | E1 | CE1 |
|---|---|---|
| Composition | | |
| PA6T (wt.%) | 58.3 | 58.3 |
| Additives (wt.%) | 1.7 | 1.7 |
| Carbon Fiber 1 (wt.%) | 40 | |
| Carbon Fiber 2 (wt.%) | | 40 |

| Mechanical Performance | | |
|---|---|---|
| Tensile Chord Modulus (GPa) | 37 | 34 |
| Flexural Chord Modulus (GPa) | 32 | 28.90 |
| Un-Notched Impact (kJ/m²) | 54 | 53 |

Referring to Table 1, surprisingly, the sample having polyurethane sized carbon fiber had improved mechanical performance to the corresponding sample having an amide sized carbon fiber to match the chemistry of the PA6T semi-aromatic polyamide polymer. For example E1, having 3.5 wt.% polyurethane sized carbon fiber had a 8.5% and 9.7% improvement in the tensile chord modulus and flexural chord modulus, respectively, relative to sample CE1, having 3.5 wt.% of an amide sized carbon fiber. Furthermore, E1 had an un-notched impact of 54 kJ/m² while CE2 had an un-notched impact of 53 kJ/m². Similar results were seen for the samples having MXD6 as the semi-aromatic polyamide resin, as demonstrated below. For clarity, the additive package in each sample was identical.

**TABLE 2**

| | E2 | CE2 |
|---|---|---|
| Composition | | |
| MXD6 | 36.1 | 36.1 |
| Additives (wt.%) | 8.9 | 8.9 |
| Carbon Fiber 1 (wt.%) | 35 | |
| Carbon Fiber 2 (wt%) | | 35 |
| Glass Fiber (wt.%) | 20 | 20 |

| Mechanical Performance | | |
|---|---|---|
| Notched Impact (kJ/m²) | 10.5 | 9.8 |
| Flexural Strength (MPa) | 480 | 476 |
| Flexural Modulus (GPa) | 42 | 39 |

Referring to Table 2, surprisingly, the sample having polyurethane sized carbon fiber had improved mechanical performance to the corresponding sample having an amide sized carbon fiber to match the chemistry of the MXD6 semi-aromatic polyamide polymer. For example E2, having 3.5 wt.% polyurethane sized carbon fiber had a 7.1% and 7.7% improvement in the in the notched impact resistance and flexural modulus, respectively, relative to sample CE2, having 3.5 wt.% of an amide sized carbon fiber. Furthermore, E2 had a flexural strength of 480 MPa while CE2 had a flexural strength of 476 MPa.

### Example 2 : Mechanical Performance of Polymer Compositions including a PAEK Polymer and a Polyurethane Sized Carbon Fiber

This example demonstrates the mechanical performance of polyurethane sized carbon fibers in polymer compositions including a PAEK polymer as the thermoplastic polymer.

To demonstrate mechanical performance, 2 samples were formed with PEEK as the thermoplastic polymer. For each sample, mechanical properties were tested and described above. Sample parameters and mechanical testing results are displayed in Table 3.

**TABLE 3**

| | E3 | CE3 |
|---|---|---|
| Composition | | |
| PEEK | 70 | 70 |
| Carbon Fiber 3 (wt.%) | 30 | |
| Carbon Fiber 4 (wt%) | | 30 |

| Mechanical Performance | | |
|---|---|---|
| Tensile Modulus (GPa) | 23.68 | 20.67 |
| Tensile Strength (MPa) | 223.63 | 204 |
| Flexural Modulus (GPa) | 22.30 | 19.43 |
| Flexural Strength (MPa) | 321.79 | 310.20 |

Referring to Table 3, surprisingly, the sample having polyurethane sized carbon fiber had improved mechanical performance to the corresponding sample having an aromatic polymer sized carbon fiber to match the chemistry of the PEEK polymer. For example E3, having polyurethane sized carbon fiber had a 15% and 10% improvement in tensile modulus and tensile strength, respectively, relative to sample CE3, having an aromatic polymer sized carbon fiber. Furthermore, E3 also had a 15% and 4% improvement in flexural strength and flexural modulus, respectively, relative to sample CE3.

### Example 3 : Effect of the Amount of Polyurethane Sizing on Carbon Fibers in Polymer Compositions

This example demonstrates the effect of the amount of polyurethane sizing on carbon fibers on the mechanical performance of polymer compositions.

To demonstrate mechanical performance, 3 samples were formed. For each sample, mechanical properties were tested and described above. Sample parameters and mechanical testing results are displayed in Table 4. In Table 4, "% increase" refers to the increase in the corresponding value relative to sample E4. For clarity, the additive package in each sample was identical.

**TABLE 4**

| | E4 | E5 | E6 |
|---|---|---|---|
| Composition | | | |
| PPS | 80 | 80 | 80 |
| Carbon Fiber 5 | 19.75 | | |
| (wt.%) | | | |
| Carbon Fiber 6 (wt%) | | 19.75 | |
| Carbon Fiber 7 (wt.%) | | | 19.75 |
| Additives | 0.25 | 0.25 | 0.25 |

| Mechanical Performance | | | |
|---|---|---|---|
| Tensile Modulus (GPa) [% increase] | 18.84 | 19.33 [3%] | 21.07 [12%] |
| Tensile Strength (MPa) | 188 | 194 [3%] | 207 [10%] |
| Flexural Modulus (GPa) | 16.60 | 16.90 [2%] | 17.90 [7%] |
| Flexural Strength (MPa) | 256 | 264 [3%] | 278 [8%] |
| Notched Impact Resistance (kJ/m²) | 4.23 | 4.69 [10%] | 5.33 [21%] |
| Un-Notched Impact Resistance (kJ/m²) | 27.5 | 32.9 [16%] | 37.8 [27%] |

Referring to Table 3, surprisingly, the mechanical performance increased non-linearly with the amount of polyurethane sizing on the carbon fiber. For example, comparison of samples E4 and E5 demonstrates that an 11% increase in polyurethane sizing (Carbon Fiber 5 to Carbon Fiber 6) yielded a 2% to 3% increase in tensile performance. On the other hand, comparison of samples E4 and E6 demonstrated that a 16.6% increase in the polyurethane sizing (Carbon Fiber 6 to Carbon Fiber 7) yielded a 10% to 12% increase in tensile performance. Similarly, while E4 demonstrated a 10% increase in un-notched impact performance relative to E3, E5 had a 21% improvement.

The embodiments above are intended to be illustrative and not limiting. Additional embodiments are within the inventive concepts. In addition, although the present invention is described with reference to particular embodiments, those skilled in the art will recognized that changes can be made in form and detail without departing from the spirit and scope of the invention. Any incorporation by reference of documents above is limited such that no subject matter is incorporated that is contrary to the explicit disclosure herein.

## Claims

1. A polymer composition comprising:
- a thermoplastic polymer selected from the group consisting of a semi-aromatic polyamide polymer, a poly(aryl ether ketone) ("PAEK") polymer and a polyphenylene sulfide ("PPS") polymer and
- a carbon fiber comprising a polyurethane sizing.

2. The polymer composition of claim 1, wherein the carbon fiber comprises at least 2.5 wt.% of the polyurethane sizing, relative to the total weight of the carbon fiber.

3. The polymer composition of either claim 1 or claim 2, wherein the carbon fiber comprises at least 2.9 wt.% of the polyurethane sizing, relative to the total weight of the carbon fiber.

4. The polymer composition of any one of claims 1 to 3, wherein the carbon fiber comprises no more than 5 wt.% of the polyurethane sizing, preferably no more than 4 wt.% of the polyurethane sizing, relative to the total weight of the carbon fiber.

5. The polymer composition of any one of claims 1 to 4, wherein the thermoplastic polymer is a semi-aromatic polyamide polymer having a recurring unit R_{PA} represented by a formula selected from the following group of formulae: 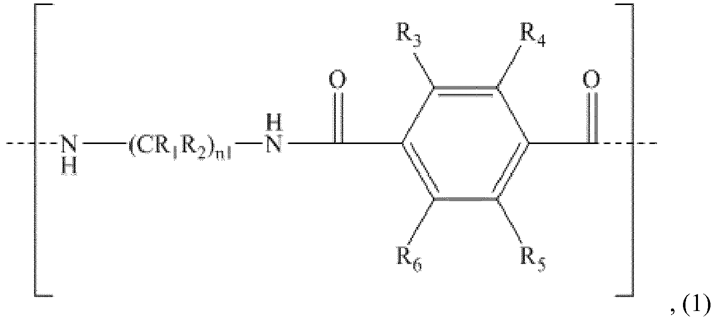 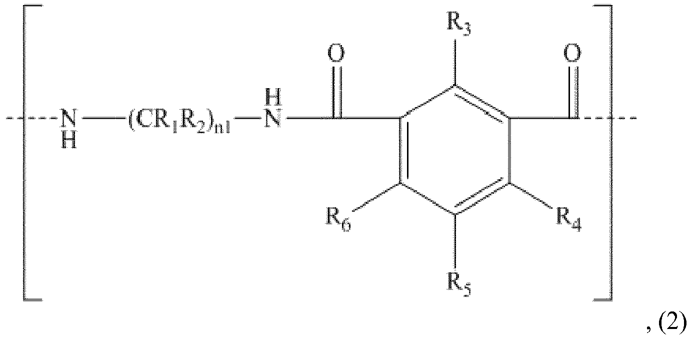 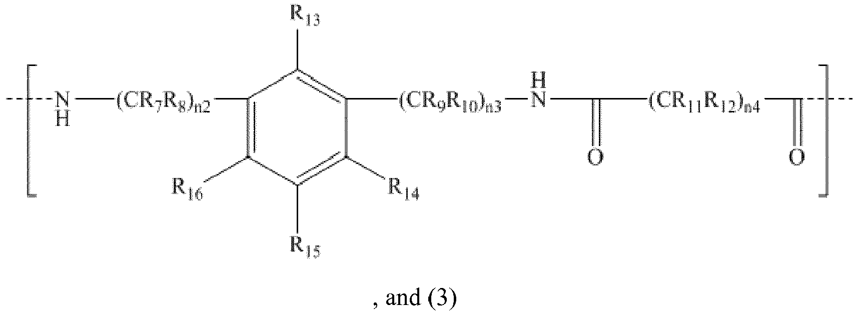 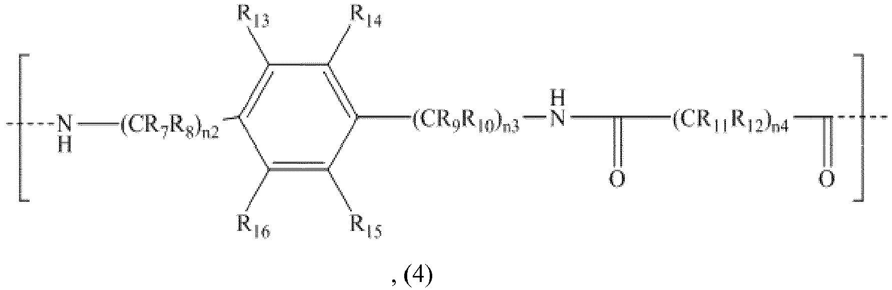 wherein
- R₁, R₂, and R₇ to R₁₂, at each location, and R₃ to R₆ and R₁₃ to R₁₆ are independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- n₁ and n₂ are independently selected integers from 4 to 10; and
- n₂ and n₃ are independently selected integers from 1 to 5.

6. The polymer composition of claim 5, wherein the semi-aromatic polyamide polymer is selected from the group consisting of PA 4T, PA 6T, PA 61, PA 9T, PA 10T and MXD6.

7. The polymer composition of claim 5, wherein the semi-aromatic polyamide polymer further comprises a recurring unit R**_{PA} represented by the following formula: 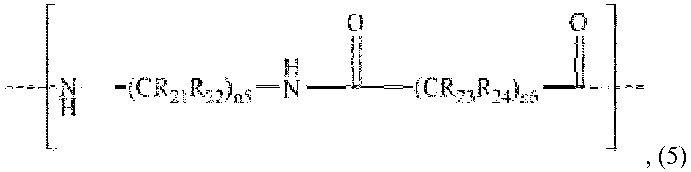 wherein
- R₂₁ to R₂₄, at each location, is independently selected from the group consisting of a hydrogen, a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- n₅ is an integer from 4 to 10; and
- n₆ is an integer from 2 to 8.

8. The polymer composition of claim 7, wherein the semi-aromatic polyamide polymer is selected from the group consisting of PA 6T/6I, PA 6T/66 and PA 6T/6I/66.

9. The polymer composition of any one of claims 1 to 4, wherein the thermoplastic polymer is a PAEK polymer comprising a recurring unit R_{PAEK} represented by a formula selected from the following group of formulae: 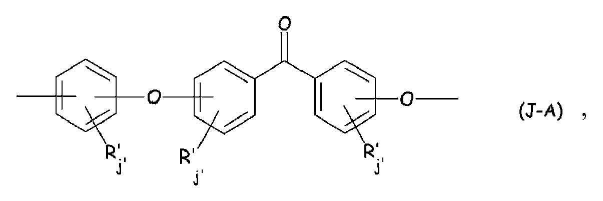 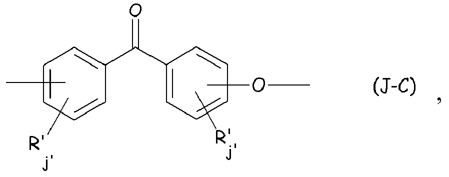 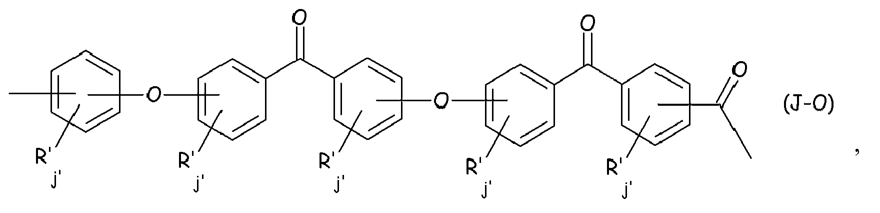 wherein
- R', at each location, is indepenendly selected from the group consisting of a halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
- j' is an integer from 0 to 4; and
- Y' is an alkylidene group.

10. The polymer composition of claim 9, wherein recurring unit R_{PAEK} is represented by a formula selected from the following group of formulae: 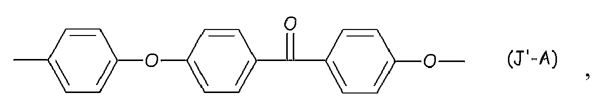 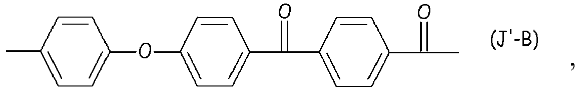 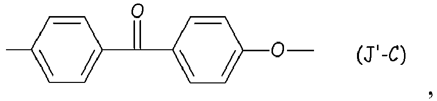 and

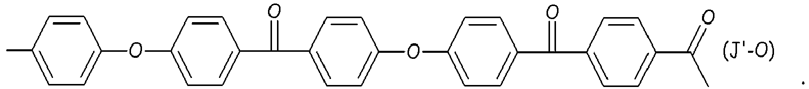

11. The polymer composition of any one of claims 1 to 4, wherein the thermoplastic polymer is a PPS polymer having a recurring unit R_{PPS} represented by the following formula: 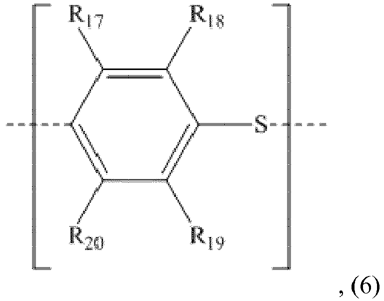 wherein R₁₇ to R₂₀ are independently selected from the group consisting of a hydrogen, an alkyl, an aryl, an alkoxy, an aryloxy, an alkylketone, an arylketone, a fluoroalkyl, a fluoroaryl, a bromoalkyl, a bromoaryl, a chloroalkyl, a chloroaryl, an alkylsulfone, an arylsulfone, an alkylamide, an arylamide, an alkylester, an arylester, a fluorine, a chlorine, and a bromine.

12. The polymer composition of any one of claims 1 to 11, wherein the polymer composition comprise:
- 20 wt.% to 80 wt.% of the thermoplastic polymer and
- from 5 wt.% to 60 wt.% of the carbon fiber,
wherein the wt.% of the thermoplastic polymer and carbon fiber is relative to the total weight of the polymer compositions.

13. The polymer composition of any one of claims 1 to 12, further including a glass fiber.

14. The polymer composition of claim 13, wherein the polymer composition includes at from 5 wt.% to 50 wt.% of the glass fiber, wherein the wt.% of the glass fiber is relative to the total weight of the polymer composition.

15. An automotive component or mobile electronic device component comprising the polymer composition of any one of claims 1 to 14.
